# EUROPEAN PATENT APPLICATION

(11) **EP 1 742 420 A1**
(43) Date of publication of application: **10.01.2007**
(21) Application number: 06722300.8
(22) Date of filing: 11.04.2006
(51) Int. Cl.: H04L 12/24

(54) **A FAILURE MANAGEMENT METHOD AND APPARATUS FOR INTERWORKING ETHERNET AND MULTIPLE PROTOCOL LABEL SWITCH NETWORK**

(30) Priority: 15.04.2005 CN 200510064584
(71) Applicant: Huawei Technologies Co., Ltd., Longgang District, Shenzhen Guangdong 518129 (CN)
(72) Inventor: ZHAI, Suping, Huawei Administration Bldg., Guangdong 518129 (CN)
(74) Representative: Thun, Clemens
(86) International application number: PCT/CN2006/000648
(87) International publication number: WO 2006/108352

(57) **Abstract**

The present invention relates to a method for fault management in an Ethernet and a Multi-protocol Label Switching (MPLS) network interworking, which mainly includes: in an interworking network, a fault monitoring entity monitors the interworking network; and when detecting a fault in the interworking network, the fault monitoring entity sends a fault alarm notification message to an Ethernet End System. The present invention discloses a device for fault management in an Ethernet and a MPLS network interworking as well. According to the solution provided by the present invention, the fault alarm information can be sent to the corresponding peer at the opposite end timely when there is a fault in the interworking network; thus effectively guaranteeing the end-to-end management of fault alarm in the Ethernet and MPLS network interworking and effectively improving the service transmission reliability in the interworking network.

## Description

### Field of the Technology

The present invention relates to communication technologies, and more particularly, to a method and corresponding device for fault management in Ethernet and Multi-protocol Label Switching (MPLS) network interworking network.

### Background of the Invention

Along with the development of network communication technologies, Ethernet services are developing from Local Area Network (LAN) to Metropolitan Area Network (MAN) and telecommunication network. In the Next Generation Ethernet service for which the demands are increasing, MPLS, based on its unique advantages, such as rapid recovery, network extendibility, Quality of Service (QoS) ability, service congregation ability and inter-operability of services, has become the first option of network technologies. That is to say, the Ethernet and MPLS network interworking network has become the trend.

A guideline definition of the Ethernet and MPLS network interworking Model has been made in the International Telecommunication Union Telecommunication Standardization Sector (ITU-T) Y.1415 document, and at the same time, the Pseudo-Wire Emulation Edge-to-Edge (PWE3) of the Internet Engineering Task Force (IETF) has made detailed definitions for the application of the Ethernet and MPLS network interworking, draft-ietf-pwe3-ethernet-encap-09.txt, and for encapsulation of Ethernet services running in an MPLS network.

In the Ethernet and MPLS network interworking model, it is needed not only to perform the corresponding encapsulation process, but also to have a corresponding fault alarm mechanism; thus, when a fault occurs, it can be found timely so as to adopt a corresponding protection measure to guarantee the reliability of the service transmission between the Ethernet and the MPLS network. In the available draft, however, no fault alarm interworking mechanism has been provided for Operation, Administration and Maintenance (OAM) with regard to the Ethernet and MPLS network interworking.

At present, in Y.1711 published by the ITU-T, only a fault detection mechanism for the MPLS is defined in detail whereas the Ethernet and MPLS network interworking model does not provide a fault alarm notification mechanism for the interworking between the MPLS network and the Ethernet.

Because there is no fault alarm notification mechanism for the Ethernet and MPLS network interworking, there is no solution to an end-to-end OAM mechanism for the Ethernet and MPLS network interworking; thus, the reliability of the interworking between Ethernet and MPLS network can not be guaranteed.

### Summary of the Invention

A fault management method of an Ethernet and a Multi-protocol Label Switching (MPLS) network interworking network is provided, so that a fault can be found timely to guarantee the reliability of service transmission.

A device for fault management in an Ethernet and an MPLS network interworking network is provided so that a fault can be found timely to guarantee the reliability of service transmission.

The method for fault management in an Ethernet and a Multi-protocol Label Switching (MPLS) network interworking network includes:
in the interworking network, monitoring the interworking network by a fault monitoring entity;
when detecting a fault in the interworking network, the fault monitoring entity sending a fault alarm notification message to an Ethernet End System.

The step of the fault monitoring entity monitoring the interworking network includes:
determining that a fault occurs in the interworking network if the fault monitoring entity has a fault, or has received no Ethernet Continuity Check (ETH-CC) message within a pre-configured period of time, or has detected a fault in a Label Switching Path (LSP) of the MPLS network in the interworking network, or has received an MPLS Forward Fault Indication (MPLS-FDI) message.

The step of sending the alarm notification to the Ethernet End System includes:
the fault monitoring entity sending an Ethernet Alarm Indication Signal (ETH-AIS) message to the Ethernet End System, or the fault monitoring entity sending an Ethernet Remote Fault Indication (ETH-RDI) message to the Ethernet End System;
upon receiving the message, the Ethernet End System determining that the interworking network has a fault.

After the fault monitoring entity sending the fault alarm notification message to the Ethernet End System, the method further includes the steps of:
the Ethernet End System returning the ETH-RDI message to the Ethernet End System at an opposite end.

The fault monitoring entity is the Ethernet End System; and
the step of the fault monitoring entity monitoring the interworking network includes:
the fault monitoring entity, when detecting a fault in itself, inserting a Forward Alarm ETH-AIS message in an Maintenance Entity (ME) of the fault monitoring entity, and sending the message to the Ethernet End System.

The fault monitoring entity is the Ethernet End System; and
the step of the fault monitoring entity monitoring the interworking network includes:
if the fault monitoring entity has received no ETH-CC message from the Ethernet End System within the pre-configured period of time, determining that a fault occurs.

The detected fault is caused by a fault of an Interworking Function Entity (IWF) which is located at the same side of the Ethernet End System, or by a fault of the interconnection LSP of the MPLS network in the interworking network.

The fault monitoring entity is the IWF in the interworking network; and
the step of the fault monitoring entity monitoring the interworking network includes:
upon detecting a fault state of the MPLS LSP in the interworking network, the fault monitoring entity translating the LSP fault state into the corresponding Forward Alarm ETH-AIS message and inserting the ETH-AIS message in the ME before sending the ETH-AIS message to the Ethernet End System.

The detected fault is caused by the malfunction of an Operation Administration Maintenance (OAM) function of the MPLS part in the IWF which is located at the same side of the Ethernet End System, or by a fault in the interconnection LSP of the MPLS network in the interworking network.

The fault monitoring entity is the IWF in the interworking network; and
the step of the fault monitoring entity monitoring the interworking network includes:
the fault monitoring entity, when detecting a fault of itself which does not impact the OAM function of the Ethernet part, inserting the Forward Alarm ETH-AIS message in the ME, and sending the message to the Ethernet End System.

The fault monitoring entity is the IWF in the interworking network; and
the step of the fault monitoring entity monitoring the interworking network includes:
upon receiving the MPLS-FDI message, the fault monitoring entity translating the MPLS-FDI message into the corresponding Forward Alarm ETH-AIS message and inserting the ETH-AIS message in the ME before sending the ETH-AIS message to the Ethernet End System.

The detected fault is caused by a fault in the link layer bearing the MPLS LSP.

When the fault monitoring entity is the Ethernet End System, and when the packet used for transmitting the alarm information sent to the Ethernet End System by the Ethernet End System used as the fault monitoring entity passes the IWF, an encapsulation or de-encapsulation process is performed based on the MPLS protocol.

The device for fault management in an Ethernet and a Multi-protocol Label Switching (MPLS) network interworking network, configured in the interworking network, includes:
an Ethernet End System;
a network interworking entity; and
a fault monitoring entity, used for monitoring the interworking network, and sending a fault alarm notification message to the Ethernet End System in the interworking network when detecting a fault in the interworking network.

The fault monitoring entity is set in the Ethernet End System, and when detecting a fault of itself, the fault monitoring entitywill insert a Forward Alarm Ethernet Alarm Indication Signal (ETH-AIS) message in a Maintenance Entity (ME) and send the message to the Ethernet End System.

The fault monitoring entity is set in the Ethernet End System, and is configured to return an Ethernet Remote Fault Indication (ETH-RDI) message to the Ethernet End System at the opposite end if having received no Ethernet Continuity Check (ETH-CC) message from the Ethernet End System within a pre-configured period of time.

The fault monitoring entity is set in the IWF of the interworking network, and when detecting a fault state of a Label Switching Path (LSP) of the MPLS network in the interworking network, the fault monitoring entity inserts a Forward Alarm ETH-AIS message in the ME and sends the ETH-AIS message to the Ethernet End System.

The fault monitoring entity is set in the IWF of the interworking network, and when detecting a fault of itself which does not impact an Operation, Administration, Maintenance (OAM) function of the Ethernet part, the fault monitoring entity inserts a Forward Alarm ETH-AIS message in the ME and sends the ETH-AIS message to the Ethernet End System.

The fault monitoring entity is set in the IWF of the interworking network, and when receiving an MPLS Forward Fault Indication (MPLS-FDI) message, the fault monitoring entity inserts a Forward Alarm ETH-AIS message in the ME, and sending the ETH-AIS message to the Ethernet End System.

It can be seen from the solution mentioned above in accordance with the present invention that the present invention, based on the Ethernet and MPLS network interworking model defined in Y.1415, provides the corresponding process for a fault notification under various fault conditions when the MPLS is used as a backbone network to bear the Ethernet service. That is to say, in accordance with the present invention, fault alarm information can be sent timely to the peer end when there is a fault in the interworking network such that end-to-end management of alarm for occurring faults may be guaranteed in the Ethernet and MPLS network interworking, which may make it possible for the entity at the end which obtains the corresponding alarm information to adopt proper protection measures timely, thus effectively improving the reliability of service transmission in the interworking network communication process.

### Brief Description of the Drawings

Figure 1 is a schematic diagram illustrating the Ethernet and MPLS network interworking model.
Figure 2 is a schematic diagram illustrating a specific implementing process of the method in accordance with an embodiment of the present invention.

### Embodiments of the Invention

The embodiments of the present invention are mainly to implement an OAM interworking function when an MPLS network is used as the network bearer of an Ethernet service, such that fault management under various fault conditions, based on the Ethernet and MPLS network interworking function model in Y.1415, could be implemented, and the end-to-end OAM management in the Ethernet and MPLS network interworking could be guaranteed.

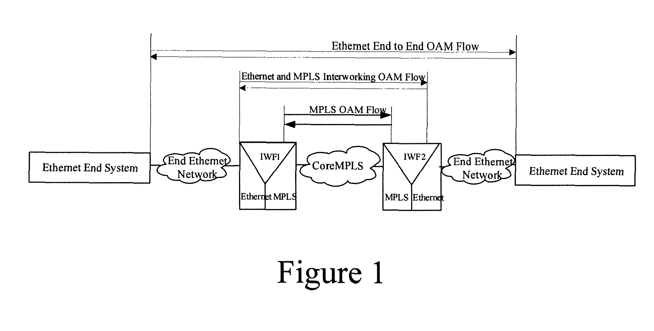

Before the method in accordance with the embodiment of the present invention is described, the Ethernet and MPLS network interworking model in Y.1415 will be briefly introduced. Figure 1 is a schematic diagram illustrating the Ethernet and MPLS network interworking model in Y.1415.

Ethernet End System1 and Ethernet End System2 are peers of each other in Figure 1, and when one end detects a fault, it is necessary to notify the opposite end through a Maintenance Entity (ME), for example, to insert a fault notification message in the ME; when Interworking Function Entity 1 (IWF1) or IWF2 detects a fault, it is necessary to notify Ethernet End System1 or Ethernet End System2 adjacent to the IWF.

An MPLS network can not be awared between Ethernet End Systems, but can be awared between IWFs; therefore, it is necessary to implement the OAM interworking function between an Ethernet and an MPLS network, and the IWF is a function entity for implementing the OAM interworking. In a core MPLS network, only the entities related to the MPLS exist.

In the interworking network model shown in Figure 1, the faults which are likely to occur specifically include:
(1) upstream/downstream Ethernet has a fault, that is, the Ethernet End System has a fault;
(2) upstream IWF, that is, IWF1, has a fault;
(3) downstream IWF, that is, IWF2, has a fault;
(4) an interconnection Label Switching Path (LSP) in the MPLS network has a fault.

It should be noted here that the upstream and the downstream are pre-defined; and it is presumed in this document that Ethernet End System1 is the upstream Ethernet End System, and Ethernet End System2 is the downstream Ethernet End System; correspondingly, IWF1 located at the same side of the MPLS network as Ethernet End System1 is the upstream IWF, and IWF2 located at the same side of the MPLS network as Ethernet End System2 is the downstream IWF.

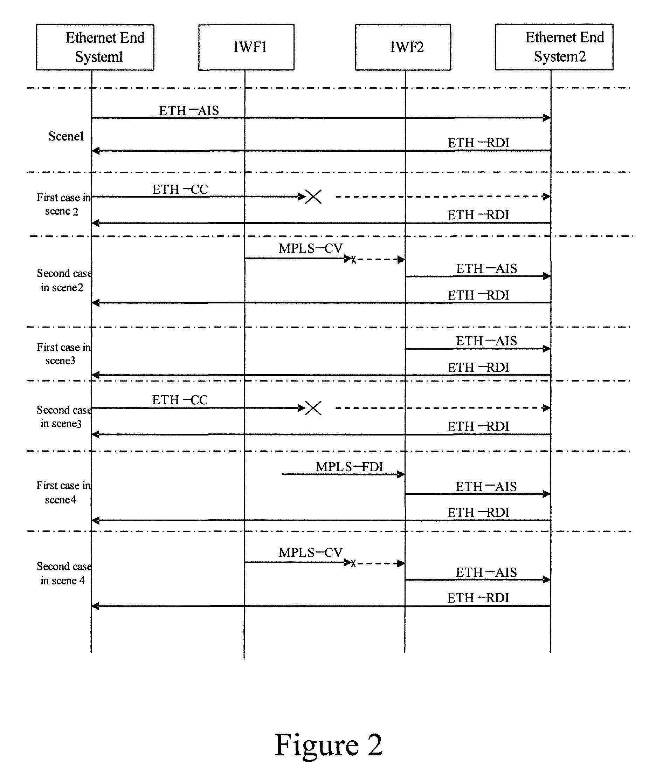

In order to monitor a fault in the interworking network, in the system as shown in Figure 1, a fault management device, that is, a fault monitoring entity used for monitoring the interworking network according to an embodiment of the present invention is added; when a fault in the interworking network is detected, the fault monitoring entity will send a fault alarm notification message to the Ethernet End System in the interworking network. The fault monitoring entity can be set in the Ethernet End System or the IWF. Figure 2 is a schematic diagram illustrating the concrete implementing process according to the method in accordance with the embodiment of the present invention, and to give a further understanding of the embodiment of the present invention, various fault alarming processes of the faults likely to appear are hereinafter described in detail, respectively, as shown in Figure 1 and Figure 2.

Ethernet End System2, when receiving an Ethernet Alarm Indication Signal (ETH-AIS) message, or receiving no Ethernet Continuity Check (ETH-CC) message from the opposite end Ethernet End System for a pre-configured period of time, will send an Ethernet Remote Fault Indication (ETH-RDI) message to the peer of the opposite end, that is, Ethernet End System1, so as to notify the Ethernet End System1 of the fault information in the interworking network. The ETH-AIS message may be from Ethernet End System1, or may be from IWF2 adjacent to Ethernet End System2.

As shown in scene 1 of Figure 2, the process for handling a network fault of the upstream/downstream Ethernet includes:
in the Ethernet having the fault, i.e. Ethernet End System1, which is taken here as an example, a Forward Alarm ETH-AIS message is inserted in the ME of Ethernet End System1 so as to send a alarm notification to the direction of Ethernet End System2;
upon receiving the ETH-AIS message, Ethernet End System2 generates and sends a reverse ETH-RDI message to the ME of Ethernet End System1 at the opposite end;
both the ETH-AIS message and the ETH-RDI message, when traversing the MPLS network, need to perform the process of encapsulation/de-encapsulation in the Ethernet and the MPLS network interworking model as defined by the protocol. Refer to the protocol for specific implementation, and no further description is herein given.

The processing of a fault in the upstream/downstream network is basically the same except that
(1) the position where the Forward Alarm message is inserted is different: when the upstream Ethernet has a fault, the ETH-AIS message is inserted in the ME of the upstream Ethernet node, and when the downstream Ethernet has a fault, the ETH-AIS message is inserted in the ME of the downstream Ethernet node,
(2) because of the difference in the inserted position, the ETH-AIS message generated by the upstream node needs to be encapsulated through the format defined according to Y.1415 in the upstream IWF, and upon traversing the MPLS network, the ETH-AIS is de-encapsulated in the downstream IWF; whereas the ETH-AIS message generated by the downstream node needs to be encapsulated through the format defined according to Y.1415 in the downstream IWF, and upon traversing the MPLS network, the ETH-AIS message is de-encapsulated in the upstream IWF.

As shown in scene 2 of Figure 2, the process for handling a fault in the upstream IWF, that is, IWF1, i.e., a fault at the side connected to the MPLS network in the IWF is described as follows:
the faults occurring in IWF1 can be categorized into two different cases, which will be described, respectively, as follows.

The first case is: the IWF1 fault does not impact the OAM function of the MPLS part in IWF1; in this case, the MPLS LSP bears the Ethernet service works normally, in other words, the LSP will not generate a fault alarm; but the IWF1 fault prevents the ME of Ethernet End System2 from receiving the ETH-CC message sent by the ME of the Ethernet End System1 at the opposite end within the pre-configured period of time. The corresponding processing in this case includes:
the ME of Ethernet End System2 enters the fault state, and sends a reverse alarm ETH-RDI message to the direction of Ethernet End system1.

The second case is: the IWF fault impacts the OAM function of the MPLS part in IWF1; in this case, the OAM function of the MPLS part in IWF1 can not work normally, no MPLS Connectivity Verification (MPLS-CV) packet can be sent normally, and the LSP fault state can be detected at the LSP end connected to IWF2. The corresponding processing in this case includes:
IWF2 translates the LSP fault state into the corresponding ETH-AIS message, and sends the message to the ME of Ethernet End System2;
the ME of Ethernet End System2, upon receiving the ETH-AIS message, sends a reverse alarm ETH-RDI massage to the direction of Ethernet End System1.

Obviously, in Figure 1, it is likely that a fault occurs at the side of IWF2 connected to the MPLS. The corresponding processing is similar to the above, which will not be described further here.

As shown in scene 3 of Figure 2, the process for handling a fault in the downstream IWF, that is IWF2, i.e., a fault at the side of IWF2 connected to the Ethernet, and the processing can be categorized into two cases, which are described, respectively, as follows.

The first case is: the IWF2 fault does not impact the OAM function of the Ethernet part in IWF2.The processing includes:
when IWF2 has the fault, the OAM function of the Ethernet part in IWF2 translates the fault into the corresponding ETH-AIS message and sends the message to the ME of Ethernet End System2;
the ME of Ethernet End System2 receives the ETH-AIS message, and sends a reverse alarm ETH-RDI message to the direction of Ethernet End System1.

The second case is: the IWF2 fault impacts the OAM function of the Ethernet part in IWF2, then the processing includes:
when the OAM function of the Ethernet part in IWF2 does not work normally, the ME of Ethernet End System2 receives the ETH-CC message sent by the opposite end, and enters the fault state;
the ME of Ethernet End System2 sends the ETH-RDI message to the direction of the peer Ethernet End System1 in the opposite end.

Obviously, in Figure 1, it is likely that a fault occurs at the side of IWF1 connected to the Ethernet. The corresponding processing is similar as the above, which will not be described further here.

As shown in scene 4 of Figure 2, the process for handling a fault occurring in the interconnection LSP of the MPLS network can be categorized into two cases, which are described, respectively, as follows:
the first case is: the interconnection LSP fault is originated from the link layer bearing the MPLS LSP; and according to the protocol definition, the MPLS can acquire a link layer fault alarm indication through network management. The corresponding processing in this case includes:
   the OAM in the MPLS translates the link layer alarm indication into the corresponding MPLS Forward Fault Indication (MPLS-FDI) message, and sends the message to IWF2;
   IWF2 translates the received MPLS-FDI into the corresponding ETH-AIS message, and sends the message to Ethernet End System2;
   the ME of Ethernet End System2, upon receiving the ETH-AIS, sends a reverse alarm ETH-RDI message to the direction of Ethernet End System1.

The second case is: the interconnection LSP fault is originated from the MPLS LSP, and the corresponding processing in this case includes:
IWF2 receives no MPLS-CV packet as the MPLS LSP has a fault, then IWF2 translates the LSP fault into the corresponding ETH-AIS message and sends the message to the direction of Ethernet End System2;
the ME of Ethernet End System 2 receives the ETH-AIS message, and sends a reverse alarm ETH-RDI to the direction of Ethernet End System1.

In the foregoing description of the fault alarm process for various faults, all the OAM packets, that is, the fault alarm messages, are handled by the following process of encapsulation/de-encapsulation defined in Y.1415.

As shown in Figure 1, the Ethernet OAM packet sent from Ethernet End System1 to the direction of Ethernet End System2 needs to be encapsulated in IWF1 into the MPLS packet according to the Y.1415 definition, and to be transmitted in the MPLS network; in IWF2, the corresponding MPLS packet needs to be de-encapsulated, then the Ethernet OAM packet is obtained, and will be transmitted to Ethernet End System2.

For the packet sent from Ethernet End System2 to Ethernet End System1, the corresponding encapsulation/de-encapsulation process is symmetrical with the foregoing process, and no further description will be given.

To sum up, the embodiments of the present invention have defined the fault notification process under various fault conditions based on the Ethernet and MPLS network interworking model in Y.1415, thus implementing the end-to-end OAM implementation mechanism and effectively improving the service transmission reliability in the communication process of interworking network.

The foregoing are just preferred embodiments of this invention and are not used for limiting the protection scope thereof. Any modification, equivalent replacement and improvement under the spirit and principle of this invention should be covered by the protection scope of the present invention.

## Claims

1. A method for fault management in an Ethernet and a Multi-protocol Label Switching (MPLS) network interworking network, comprising:
in the interworking network, monitoring the interworking network by a fault monitoring entity;
when detecting a fault in the interworking network, the fault monitoring entity sending a fault alarm notification message to an Ethernet End System.

2. The method according to Claim 1, wherein the step of the fault monitoring entity monitoring the interworking network comprises:
determining that a fault occurs in the interworking network if the fault monitoring entity has a fault, or has received no Ethernet Continuity Check (ETH-CC) message within a pre-configured period of time, or has detected a fault in a Label Switching Path (LSP) of the MPLS network in the interworking network, or has received an MPLS Forward Fault Indication (MPLS-FDI) message.

3. The method according to Claim 1, wherein the step of sending the alarm notification to the Ethernet End System comprises:
the fault monitoring entity sending an Ethernet Alarm Indication Signal (ETH-AIS) message to the Ethernet End System, or the fault monitoring entity sending an Ethernet Remote Fault Indication (ETH-RDI) message to the Ethernet End System;
upon receiving the message, the Ethernet End System determining that the interworking network has a fault.

4. The method according to Claim 1, after the fault monitoring entity sending the fault alarm notification message to the Ethernet End System, further comprising:
the Ethernet End System returning the ETH-RDI message to the Ethernet End System at an opposite end.

5. The method according to Claim 4, wherein the fault monitoring entity is the Ethernet End System; and
the step of the fault monitoring entity monitoring the interworking network comprises:
the fault monitoring entity, when detecting a fault in itself, inserting a Forward Alarm ETH-AIS message in an Maintenance Entity (ME) of the fault monitoring entity, and then sending the message to the Ethernet End System.

6. The method according to Claim 1, wherein the fault monitoring entity is the Ethernet End System; and
the step of the fault monitoring entity monitoring the interworking network comprises:
if the fault monitoring entity has received no ETH-CC message from the Ethernet End System within a pre-configured period of time, determining that a fault occurs.

7. The method according to Claim 6, wherein the detected fault is caused by a fault of an Interworking Function Entity (IWF) which is located at the same side of the Ethernet End System, or by a fault of the interconnection LSP of the MPLS network in the interworking network.

8. The method according to Claim 4, wherein the fault monitoring entity is the IWF in the interworking network; and
the step of the fault monitoring entity monitoring the interworking network comprises:
upon detecting a fault state of the MPLS LSP in the interworking network, the fault monitoring entity translating the LSP fault state into the corresponding Forward Alarm ETH-AIS message and inserting the ETH-AIS message in the ME before sending the ETH-AIS message to the Ethernet End System.

9. The method according to Claim 8, wherein the detected fault is caused by a malfunction of an Operation Administration Maintenance (OAM) function of the MPLS part in the IWF which is located at the same side of the Ethernet End System, or by a fault in the interconnection LSP of the MPLS network in the interworking network.

10. The method according to Claim 4, wherein the fault monitoring entity is the IWF in the interworking network; and
the step of the fault monitoring entity monitoring the interworking network comprises:
the fault monitoring entity, when detecting a fault of itself which does not impact the OAM function of the Ethernet part, inserting the Forward Alarm ETH-AIS message in the ME, and sending the message to the Ethernet End System.

11. The method according to Claim 4, wherein the fault monitoring entity is the IWF in the interworking network; and
the step of the fault monitoring entity monitoring the interworking network comprises:
upon receiving the MPLS-FDI message, the fault monitoring entity translating the MPLS-FDI message into the corresponding Forward Alarm ETH-AIS message and inserting the ETH-AIS message in the ME before sending the ETH-AIS message to the Ethernet End System.

12. The method according to Claim 11, wherein the detected fault is caused by a fault in the link layer bearing the MPLS LSP.

13. The method according to any of Claim 1 to 12, wherein,
when the fault monitoring entity is the Ethernet End System, and when the packet used for transmitting the alarm information sent to the Ethernet End System by the Ethernet End System used as the fault monitoring entity passes the IWF, an encapsulation or de-encapsulation process is performed based on the MPLS protocol.

14. A device for fault management in an Ethernet and a Multi-protocol Label Switching (MPLS) network interworking network, configured in the interworking network, comprising
an Ethernet End System;
a network interworking entity; and
a fault monitoring entity, used for monitoring the interworking network, and sending a fault alarm notification message to the Ethernet End System in the interworking network when detecting a fault in the interworking network.

15. The device according to Claim 14, wherein the fault monitoring entity is set in the Ethernet End System, and when detecting a fault of itself, the fault monitoring entity will insert a Forward Alarm Ethernet Alarm Indication Signal (ETH-AIS) message in a Maintenance Entity (ME) and send the message to the Ethernet End System.

16. The device according to Claim 14, wherein the fault monitoring entity is set in the Ethernet End System, and is configured for returning an Ethernet Remote Fault Indication (ETH-RDI) message to the Ethernet End System at an opposite end if having received no Ethernet Continuity Check (ETH-CC) message from the Ethernet End System within a pre-configured period of time.

17. The device according to Claim 14, wherein the fault monitoring entity is set in the IWF of the interworking network, and
when detecting a fault state of a Label Switching Path (LSP) of the MPLS network in the interworking network, the fault monitoring entity inserts a Forward Alarm ETH-AIS message in the ME and sends the ETH-AIS message to the Ethernet End System.

18. The device according to Claim 14, wherein the fault monitoring entity is set in the IWF of the interworking network, and
when detecting a fault of itself which does not impact an Operation, Administration, Maintenance (OAM) function of the Ethernet part, the fault monitoring entity inserts a Forward Alarm ETH-AIS message in the ME and sends the ETH-AIS message to the Ethernet End System.

19. The device according to Claim 14, wherein the fault monitoring entity is set in the IWF of the interworking network, and when receiving an MPLS Forward Fault Indication (MPLS-FDI) message, the fault monitoring entity inserts a Forward Alarm ETH-AIS message in the ME, and sending the ETH-AIS message to the Ethernet End System.
